# NEW EUROPEAN PATENT SPECIFICATION

(11) **EP 1 719 406 B2**
(45) Date of publication and mention of the opposition decision: **04.04.2012**
(45) Mention of the grant of the patent: 16.01.2008
(21) Application number: 05103785.1
(22) Date of filing: 06.05.2005
(51) Int. Cl.: A01K 1/03

(54) **Cage for containing laboratory animals**
Käfig für Versuchstiere
Cage pour animaux de laboratoire

(43) Date of publication of application: 08.11.2006
(73) Proprietor: TECNIPLAST S.p.A., 21020 Buguggiate, Varese (IT)
(72) Inventor: Malnati, Giovanni, 21046 Malnate (IT); Tamborini, Paolo, 21019, Somma Lombardo (IT)
(74) Representative: Borsano, Corrado

(56) References cited:
- WO-A-03/096801
- US-A- 5 996 535
- US-A1- 2003 051 676
- US-B1- 6 308 660

## Description

The present invention relates to a cage for containing laboratory animals

A way of isolating laboratory test animals from each other and from the personnel and, at the same time, of reducing operating costs is to enclose them, either alone or in small homogeneous groups, in containers, usually small cages. Inside said cages the most convenient microclimate for the life of said animals is realized. Great care is taken to provide the container inside with a change of air adequate for maintaining low levels of ammonia and carbon dioxide concentrations, which substances are harmful to the animals good health.

Said cages are provided with means connecting the same with a pipe (or equivalent means) conveying air (generally filtered and decontaminated) at the desired pressure: said connecting means will maintain - at least for a short time - the container isolated and protected from the external environment, should said container be disconnected from the pipe and moved for any reason. The cages are generally placed on racks (either open or closed by doors or the like) attached to a framework, which is the stationary component of the breeding department. Said support framework is provided with a system that supplies the single cages with air and, preferably but not necessarily, with the water to be conveyed to the drinking-troughs, if any.

The known cages are normally closed by means of a plastic top equipped with latches, inlet and outlet air valves, external water bottle and, inside the cage, a wire bar lid with a nylon gasket fitted on the upper profile of the cage base.

US 6,308 660 B1 discloses a cage according to the preamble of claim 1. WO 03/096801 A1 also discloses a cage for containing laboratory animals. DT 2007301 discloses a closure system for a food transport container.

The problems to be faced with the above kind of cages are an increasing need for improving the containment at cage level while keeping the practicality of use, reducing the number of cage components, increasing the number of cages within the rack footprint and standardising of rack structure.

A further problem also to be solved is to improve the means for positioning and keeping stable and firm the cages to the rack.

Therefore it is the main purpose of the present invention to provide a cage for containing laboratory animals to solve the above problems.

The present invention provides a cage for containing laboratory animals comprising the features of claim 1.

The U-like shaped housing may be either in the base or in the top, and the side rim may be either in the top or in the base.

The above purpose is achieved by means of a cage for containing laboratory animals as described in the attached claims, which are considered an integral part of the present description.

The invention will become clear from the following detailed description, given by way of a mere exemplifying and non limiting example, to be read with reference to the attached drawing figures, wherein:
Figure 1 shows a cage in accordance with the invention;
Figure 2 shows a side section of the cage;
Figures 2A and 2B show enlarged particulars of parts A and B of fig. 2;
Figure 3 shows a filter retainer;
Figures 4A and 4B show a top view and a side partial section of the cage;
Figure 5 shows the cage with the top open;
Figure 6 shows a variant of the cage in accordance with the invention;
Figure 7 shows the cage with the suspension means to the rack;
Figures 8-14 show particulars of the side runners of the cage and of the slide rails of the rack, forming the suspension means.

The same reference numerals and letters in the figures designate the same or functionally equivalent parts.

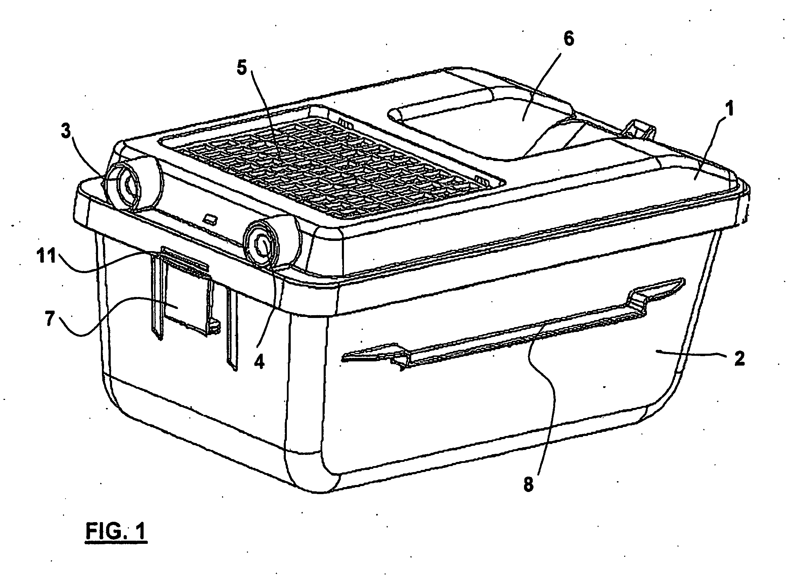

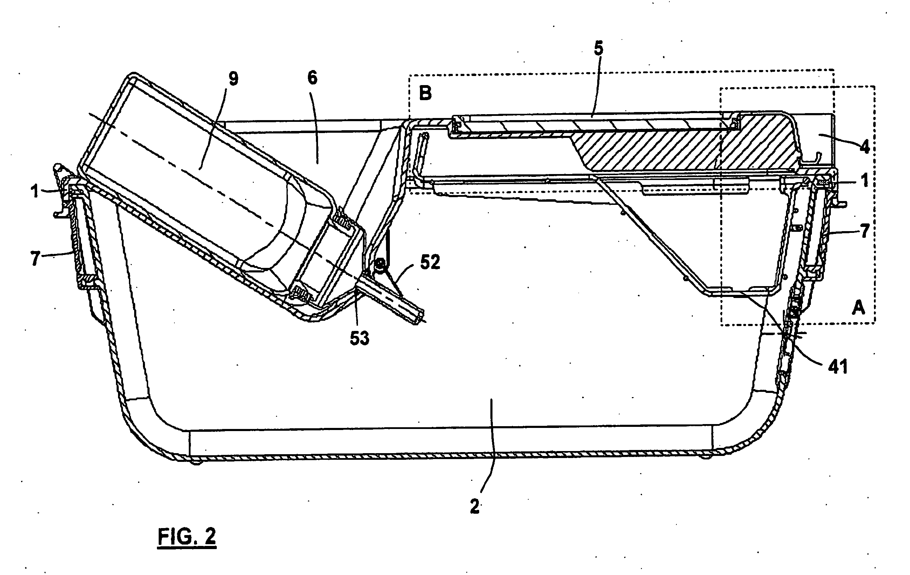

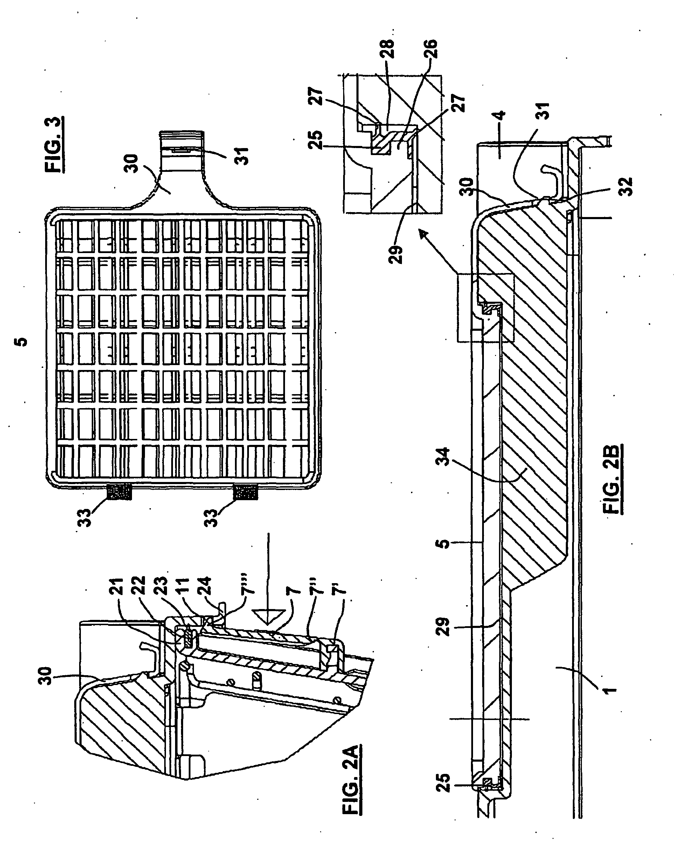

In figures 1 and 2, the cage comprises a top part 1, a base part 2, air inlet and outlet valves 3, 4, a filter retainer 5 in the top, a depression 6 in the top for retaining a bottle 9, two latches 7 and two side runners 8 (one is shown only in fig. 1).

In figure 2A the upper edge 21 of the base part 2 has a U-like shaped housing towards the outside of the edge, where a gasket 22 is housed. The gasket 22 is preferably made of silicone, and has a lip 23 projecting out of the U-like shaped edge, and bending in contact with the side rim 24 of the top 1, which overlaps the edge 21 of the base. Preferably the gasket 22 is radially covering the whole of the circumpherence of the base edge, ensuring the complete sealing of the cage.

The latch 7 has a form of a plate, is connected on one side 7' to the base 2, shows a bending line 7" with a smaller thickness, and a projecting hook 7'" at the opposite side, restraining in a suitable slot 11 made in the top.

In figures 2B and 3, the filter retainer 5 is in the form of a squared plastic grid, held in a suitable recess in the top, and sealed to the recess by means of a specially designed gasket 25, preferably made of silicone, around the perimeter of the retainer. Preferably the gasket 25 has a U-like shape, housed in a perimetral projection 26 of the retainer.

The gasket 25 has one or more lips 27 projecting out of the retainer edge and bending in contact with the side rim 28 of the recess in the top and ensuring the sealing. The retainer 5 holds pressed a filter sheet 29, preferably a microbiological filter media or Reemay® filter paper. The retainer 5 is fixed to the top 1 on one side by means of a clip 30 having a slot 31 restraining in an hook 32 in the top 1, and on the opposite side by means of tabs 33 restraining in corresponding slots in the side rim of the recess.

A plastic divider 34 is present between the air inlet and outlet valves 3, 4, in the internal part of the top, to channel the air to the front of the cage, thus to improve the ventilation efficiency, and to avoid any air shortcut between the two valves.

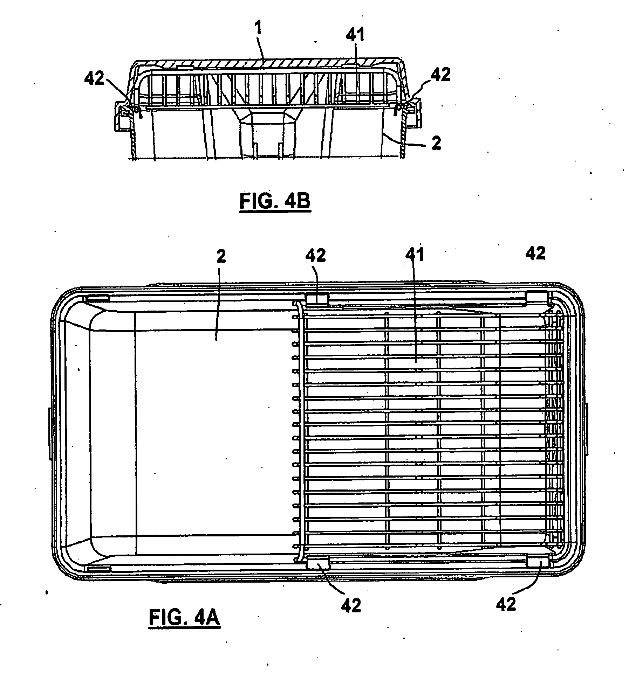

As shown in figures 4A and 4B, inside the cage there is a lid 41 in the form of a grid, preferably made of stainless steel or plastics, covering a part only of the cage, approximately one half. The lid works as a feeder and protects some plastic parts of the cage above it from being chewed by the animals. The lid 41 (also shown in fig. 2) is suspended in the upper part of the base 2 by a number of flaps 42 attached to the internal part of the upper edge of the base 2.

The feature of the lid of covering a part only of the cage also solves the problem of rendering the interior of the cage more visible and accessible by the operator without removing the lid.

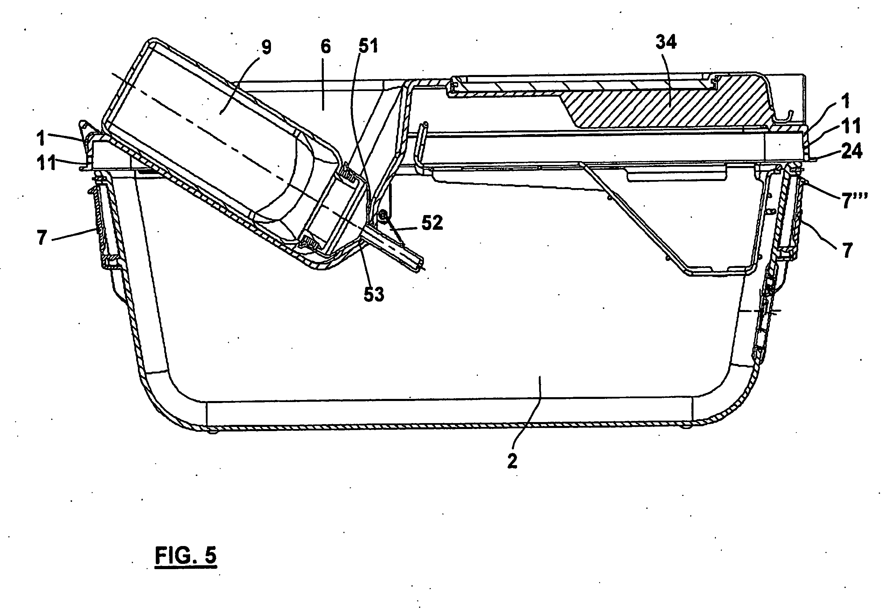

With reference to figure 5 showing a cage with the top removed over the base, in operation for closing the cage the latches 7 are not touched and the top is simply let fall down on the base. The latches 7 bend towards the base 2 due to the impact with the side rim 24 of the top 1, and the projecting hook 7'" of the latches restrains in the slot 11, fixing the top 1 to the base 2. The lip 23 of the gasket 22 bends in contact with the top.

For removing the top 1 from the cage, at least one of the latches 7 is pressed, disengaging the hook 7'" from the slot 11, to let the top lift up.

The bottle 9 is inserted in a hole 51 of the depression 6 of the top, opening a flap 52 designed to seal the hole 51 when the bottle is removed. An O-ring gasket 53 around the bottle seals the hole 51 when the bottle is in. The depression in the top allows the removal of the bottle without the need of opening the cage, thus reducing the technicians' workload.

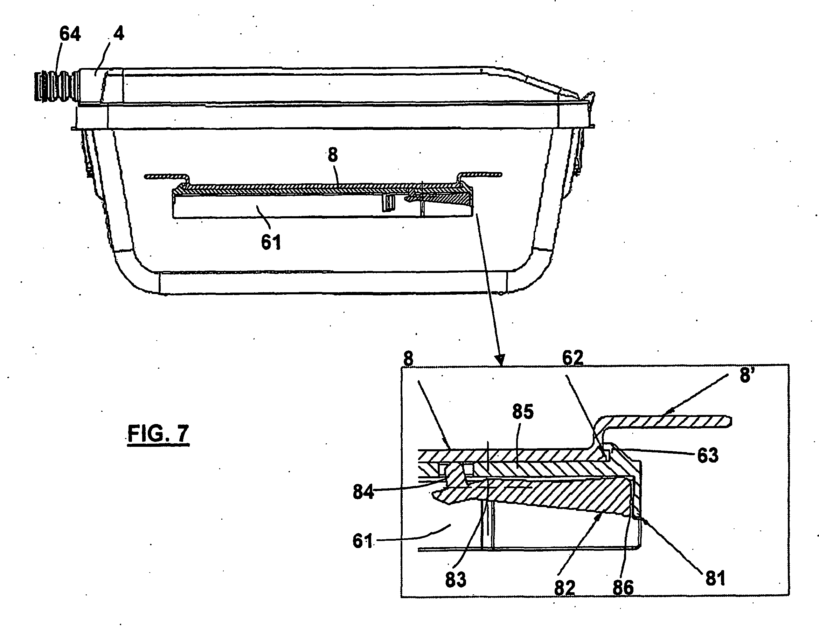

With reference to figures 1 and 7, two side runners 8 keep the cage suspended on a rack (not shown) with an automatic self-locking mechanism.

The side runners 8 are positioned on horizontal slide rails 61 of the rack. As can be seen better in the enlargement of Figure 7, the side runners 8 have locking lips 62 at their ends that, with the cage inserted in the rack, enter rail grooves 63 at end raisers of the slide rails 61, locking the cage to the rack.

The air inlet and outlet ports of the rack (not shown in the figure), connected in a known way to the air pipelines of the rack, are equipped with elastic bellows 64 fitting with the valves 3, 4 of the cage. This way, when the cage is inserted in the rack, the air flows between the air pipelines of the rack and the internal part of the cage, through the valves 3, 4.

To insert the cage into the rack, the side runners 8 slide on the slide rails 61, all the way down, till when the elasticity of the bellows 64 is taken advantage of, as they secure elastically to the valves 3 and 4 and to the rack, then the front of the cage is pushed down and therefore the locking lips 62 of the side runners secure themselves definitively to the corresponding rail grooves 63 of the slide rails 61.

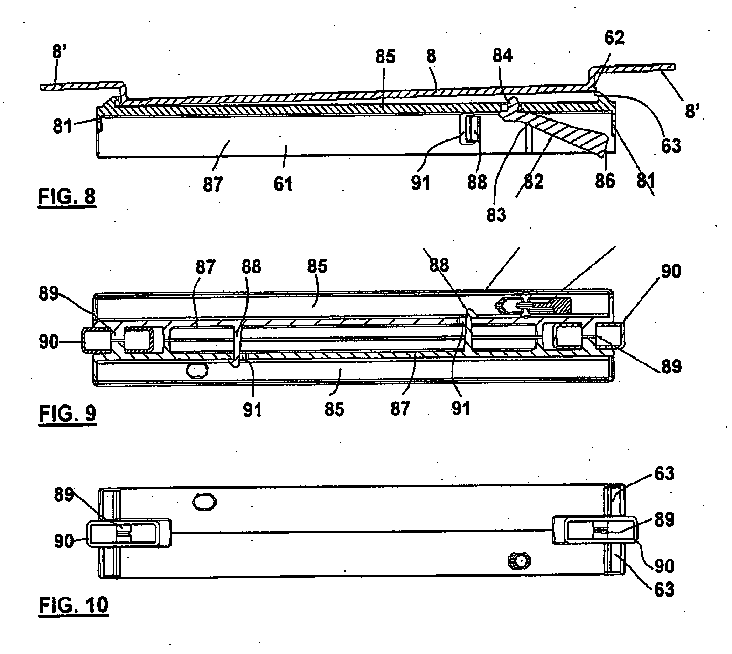

To remove the cage from the rack, the cage is pushed towards the bellows 64, the front end of the cage is raised, so that the front locking lips 62 lift up in relation to the corresponding rail grooves 63 (see also figure 8), and the cage is removed, unbinding the bellows 64 from the valves 3 and 4.

With reference to the enlargement of figure 7 and to figure 8, a docking indicator 82 is present just below an orizontal upper side 85 of the slide rail 61, and behind the front end 81 of the slide rail bending down. The docking indicator is in the form of a lever pivoting around a pivoting point 83 where it is fixed on the slide rail. An internal arm of the docking indicator has a protrusion 84 which can enter a hole in the upper side 85.

When the cage is not present or is disengaged over the slide rails 61 of the rack and is not firmly fixed (figure 8), the front part of the side runners 8 of the cage is raised with respect to the orizontal upper side 85 of the slide rail 61, so as the protrusion 84 raises and exits out of the hole in the upper side 85, while the end 86 of the opposite arm of the docking indicator 82 goes down below the front end 81 of the slide rail and becomes visible from the front part of the rack. This is used as an indication for the operator that the cage is not firmly fixed to the rack and that an intervention is needed to fix the cage the right way. For a better visibility, the docking indicator can have a brilliant colour, like red for example.

When instead the cage is firmly fixed on the slide rails (enlargement of figure 7), the protrusion 84 is pushed down by the side runner 8, and the end 86 of the opposite arm of the docking indicator 82 is going up and disappears behind the front end 81. This is used as an indication for the operator that the cage is firmly fixed to the rack.

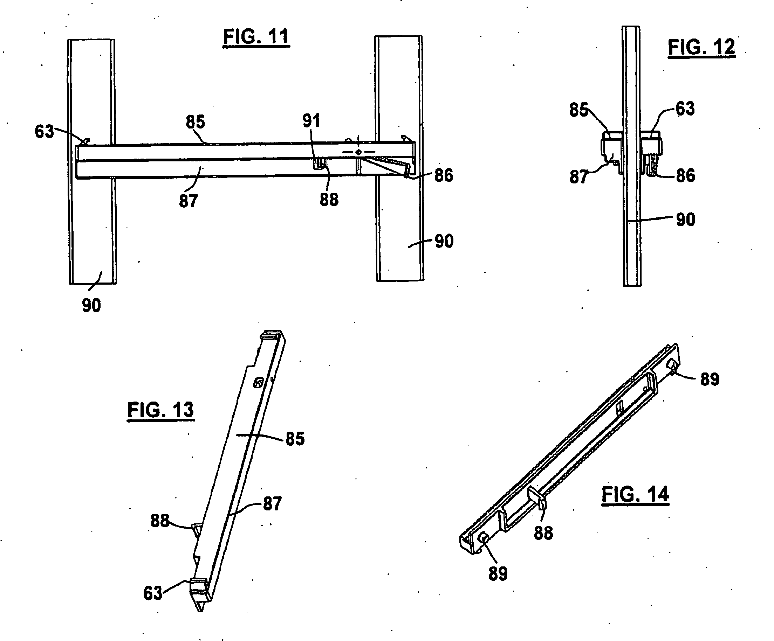

With reference to the figures 9 to 14, further particulars of the slide rails 61 of the rack are shown.

A slide rail has a horizontal side 85 and a vertical side 87. In the vertical side 87 towards the rack there are one or more protruding hooks 88 and one or more protruding buttons 89. The latter enter corresponding holes in the walls 90 of the rack.

Each slide rail, when fixed to a wall 90 of the rack, faces an opposite slide rail carrying the next cage in the rack, so as two opposite slide rails have a specular shape. The protruding buttons 89 enter the holes in the walls 90 and the protruding hooks 88 engage with corresponding holes 91 in the faced slide rail. This way the couple of slide rails are firmly fixed to the walls 90 of the rack.

Many variants are possible to the embodiment example described above, without going out of the scope of the invention.

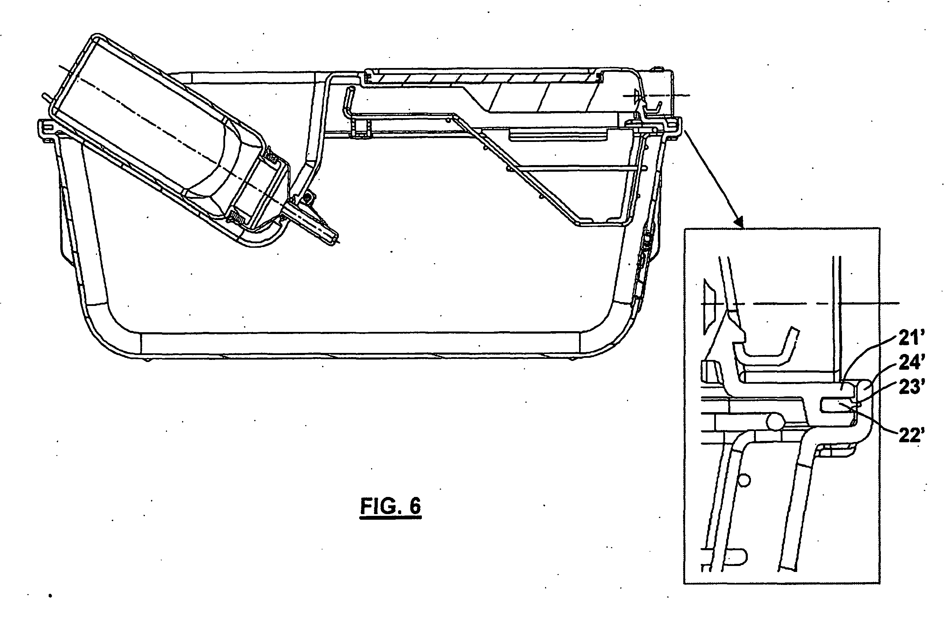

For example, with reference to figure 6, the gasket can be held in the top part, and bending against a rim in the upper part of the base.

In figure 6 the edge 21' of the top part 1 has a U-like shaped housing towards the outside of the edge, where a gasket 22' is housed. The gasket 22' has a lip 23' projecting out of the U-like shaped edge, and bending in contact with the side rim 24' of the base 2, which overlaps the edge 21' of the top. Preferably the gasket 22' is radially covering the whole of the circumpherence of the top edge, ensuring the complete sealing of the cage.

By means of the present invention, a number of advantages are achieved.

The sealing is ensured by the gasket lip bending in contact with the side rim only; the latches are mainly present to the purpose of avoiding unwanted opening of the cage.

The new features aim at improving the containment at cage level while keeping the practicality of use, reducing the number of cage components, increasing the number of cages within the rack footprint and standardising of rack structure.

Further implementation details will not be described, as the man skilled in the art is able to carry out the invention starting from the teaching of the above description.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the spirit and scope of the invention are deemed to be covered by this invention.

## Claims

1. Cage for containing laboratory animals, said cage comprising a top (1) and a base (2), a closure system at the boundary between the top and the base, air inlet and outlet valves (3, 4), a filter retainer (5) in the top, **characterized in that** the closure system comprises:
at an edge (21, 21') in one side of the boundary a U-like shaped housing open towards the outside of the edge;
a first gasket (22, 22') housed in said U-like shaped housing at said edge (21, 21'), said first gasket having a lip (23, 23') projecting out of the edge, and bending in contact with a side rim (24, 24') in the other side of the boundary, said side rim overlapping said edge (21, 21') to define the boundary.

2. Cage for containing laboratory animals according to claim 1, **characterized in that** said U-like shaped housing is in said base (2) and said side rim (24) is in said top (1).

3. Cage for containing laboratory animals according to claim 1, **characterized in that** said U-iike shaped housing is in said top (1) and said side rim (24') is in said base (2).

4. Cage for containing laboratory animals according to claim 1, **characterized in that** said first gasket (22, 22') is radially covering the whole of the circumpherence of said upper edge (21, 21'), and is made of silicone.

5. Cage for containing laboratory animals according to claim 1, **characterized in that** it further comprises at least two latches (7), connected on one side (7') to the base (2), and having a bending line (7") with a smaller thickness, and a projecting hook (7"') at the opposite side, to be restrained in a slot (11) in the top (1), so that in operation the latch bends in the bending line (7") and the projecting hook (7"') can be engaged to or disengaged from the slot (11).

6. Cage for containing laboratory animals according to claim 1, **characterized in that** it further comprises a filter retainer (5) for filter sheets in the top (1), sealed to the top by a second gasket (25).

7. Cage for containing laboratory animals according to claim 6, **characterized in that** said filter retainer (5) is held in a recess in the top, and sealed to the recess by said second gasket (25) around the perimeter of the filter retainer (5), said second gasket having lips (27) projecting out of the retainer edge and bending in contact with a side rim (28) of the recess.

8. Cage for containing laboratory animals according to claim 6 or 7, **characterized in that** said filter retainer (5) has a perimetral projection (26), said second gasket (25) being U-shaped housed in said perimetral projection (26).

9. Cage for containing laboratory animals according to claim 6 or 7, **characterized in that** said filter retainer (5) is fixed to the top (1) on one side by means of a clip (30) having a slot (31) restraining in an hook (32) in the top, and on the opposite side by means of tabs (33) restraining in slots in the side rim of the recess.

10. Cage for containing laboratory animals according to claim 1, **characterized in that** it further comprises a lid (41) inside the cage, in the form of a grid, covering a part only of the cage, approximately one half, said lid (41) being suspended in an upper part of the base (2) by a number of flaps (42) attached to an internal part of the upper edge of the base.

11. Cage for containing laboratory animals according to claim 1, **characterized in that** it further comprises a hole (51) In a depression (6) of the top, for inserting a bottle (9) opening a flap (52) designed to seal the hole (51) when the bottle Is removed, and an O-ring gasket (53) around the bottle sealing the hole (51) when the bottle is in.

12. Cage for containing laboratory animals according to claim 1, **characterized in that** the base (2) of the cage further comprises two side runners (8) designed to keep the cage suspended on horizontal slide rails (61) on a rack, said side runners (8) having locking lips (62) at the ends securing themselves to corresponding rail grooves (63) of said slide rails (61); and **in that** said air inlet and outlet valves (3, 4) being connected to the rack by elastic bellows (64), so that to insert the cage into the rack, the side runners (8) slide on the slide rails (61), all the way down, where the elastic bellows (64) ensure attachment to the valves (3, 4).

13. Cage for containing laboratory animals according to claim 12, **characterized in that** a docking indicator (82) is present below an horizontal upper side (85) of said slide rail (61), and behind the front end (81) of the slide rail bending down, said docking indicator (82) being in the form of a lever pivoting around a pivoting point (83) on said slide rail, so as when said cage is not present or is disengaged over the slide rails (61) of the rack and is not firmly fixed, said docking indicator (82) is visible below said front end (81) of the slide rail bending down, and when said cage is firmly fixed on the rack said docking indicator (82) disappears behind said front end (81) of the slide rail bending down.

14. Cage for containing laboratory animals according to claim 13, **characterized in that** an internal arm of the docking indicator (82) has a protrusion (84) entering a hole in the horizontal upper side (85), so as when the cage is not present or is disengaged over the slide rails (61) of the rack and is not firmly fixed, the protrusion (84) raises and exits out of an hole in the upper side (85), and an end (86) of the opposite arm of the docking indicator (82) goes down below the front end (81) of the slide rail and becomes visible from the front part of the rack, when instead the cage is firmly fixed on the slide rails, the protrusion (84) is pushed down by the side runner (8), and the end (86) of the opposite arm of the docking indicator (82) is going up and disappears behind the front end 81.

15. Cage for containing laboratory animals according to claim 12, **characterized in that** said slide rail (61) has a horizontal side (85) and a vertical side (87), in said vertical side (87) towards the rack there are one or more protruding hooks (88) and one or more protruding buttons (89), the latter entering corresponding holes in walls (90) of the rack, each side rail, when fixed to a wall (90) of the rack, facing an opposite side rail carrying the next cage in the rack, so as two opposite side rails have a specular shape, said protruding buttons (89) entering the holes in the walls (90) and the protruding hooks (88) engaging with corresponding holes (91) in the faced side rail, firmly fixing said specular slide rails to the walls (90) of the rack.

16. Cage for containing laboratory animals according to claim 1, **characterized in that** the cage further comprises a plastic divider (34) between said air inlet and outlet valves (3, 4), in the internal part of the top, to channel the air to the front of the cage, thus to improve the ventilation efficiency, and to avoid any air shortcut between the two valves.

## Patentansprüche

1. Käfig zur Aufnahme von Versuchstieren, wobei der genannte Käfig umfasst: ein Oberteil (1) und ein Unterteil (2), an der Verbindungsstelle zwischen dem Oberteil und dem Unterteil ein Verschlusssystem, Lufteintritts- und Luftaustrittsventile (3, 4), und im Oberteil einen Filterbehälter (5), **dadurch gekennzeichnet, dass** dieses Verschlusssystem umfasst:
am Rand (21, 21') auf der einen Seite der Verbindungsstelle einen U-förmigen Sitz, welcher zur Außenseite dieses Randes hin offen ist;
eine erste Dichtung (22, 22'), welche sich in dem genannten U-förmigen Sitz am genannten Rand (21, 21') befindet, wobei die genannte erste Dichtung eine Lippe (23, 23') aufweist, welche von dem Rand nach außen absteht und sich beim Kontakt mit der auf der anderen Seite der Verbindungsstelle befindlichen Seitenrandzone (24, 24') biegt, wobei diese genannte Seitenrandzone den genannten Rand (21, 21') überlappt, um auf diese Weise die Verbindungsstelle festzulegen.

2. Käfig zur Aufnahme von Versuchstieren nach Anspruch 1, **dadurch gekennzeichnet, dass** sich der genannte U-förmige Sitz im genannten Unterteil (2) befindet und dass sich die genannte Seitenrandzone (24) im genannten Oberteil (1) befindet.

3. Käfig zur Aufnahme von Versuchstieren nach Anspruch 1, **dadurch gekennzeichnet, dass** sich der genannte U-förmige Sitz im genannten Oberteil (1) befindet und dass sich die genannte Seitenrandzone (24') im genannten Unterteil (2) befindet.

4. Käfig zur Aufnahme von Versuchstieren nach Anspruch 1, **dadurch gekennzeichnet, dass** die genannte erste Dichtung (22, 22') den gesamten Umfang des genannten oberen Randes (21, 21') in radialer Richtung überdeckt und diese aus Silikon hergestellt ist.

5. Käfig zur Aufnahme von Versuchstieren nach Anspruch 1, **dadurch gekennzeichnet, dass** er weiterhin mindestens zwei Klinkvorrichtungen (7) umfasst, welche auf der einen Seite (7') mit dem Unterteil (2) verbunden sind und eine Biegelinie (7") mit einer geringeren Stärke aufweist und auf der gegenüber liegenden Seite einen vorstehenden Haken (7"') aufweist, der in einem Schlitz (11) im Oberteil (1) dergestalt festgehalten werden kann, dass die Klinkvorrichtung bei der Betätigung sich im Bereich ihrer Biegelinie (7") biegt und der vorstehende Haken (7"') in den Schlitz (11) einklinken kann oder aus ihm ausklinken kann.

6. Käfig zur Aufnahme von Versuchstieren nach Anspruch 1, **dadurch gekennzeichnet, dass** er außerdem im Oberteil (1) einen Filterbehälter (5) für Bögen eines Filtermaterials umfasst, welcher zum Oberteil hin durch eine zweite Dichtung (25) abgedichtet ist.

7. Käfig zur Aufnahme von Versuchstieren nach Anspruch 6, **dadurch gekennzeichnet, dass** der genannte Filterbehälter (5) in einer Vertiefung im Oberteil gehalten wird und zu dieser Vertiefung hin durch die genannte zweite Dichtung (25) um den Umfang des Filterbehälters (5) herum abgedichtet ist, wobei die genannte zweite Dichtung Lippen (27) aufweist, welche vom Rand des Behälters nach außen abstehen und sich beim Kontakt mit dem Seitenrand (28) der Vertiefung biegen.

8. Käfig zur Aufnahme von Versuchstieren nach Anspruch 6 oder 7, **dadurch gekennzeichnet, dass** der genannte Filterbehälter (5) einen über seinen ganzen Umfang verlaufenden Vorsprung (26) aufweist, wobei die genannte zweite Dichtung (25) eine U-förmige Gestalt aufweist und auf dem genannten, über den ganzen Umfang verlaufenden Vorsprung (26) sitzt.

9. Käfig zur Aufnahme von Versuchstieren nach Anspruch 6 oder 7, **dadurch gekennzeichnet, dass** der genannte Filterbehälter (5) am Oberteil (1) auf der einen Seite mittels einer Klammer (30) befestigt ist, welche einen Schlitz (31) aufweist, in welchem ein Haken (32) im Oberteil festen Halt findet, und auf der gegenüber liegenden Seite mit Hilfe von Ansätzen (33) befestigt ist, welche in Schlitzen Halt finden, die sich im Seitenrand der Vertiefung befinden.

10. Käfig zur Aufnahme von Versuchstieren nach Anspruch 1, **dadurch gekennzeichnet, dass** er weiterhin im Innern des Käfigs einen Deckel (41) in Form eines Gitters umfasst, welcher nur einen Teil des Käfigs - etwa die Hälfte - überdeckt, wobei der genannte Deckel (41) im oberen Bereich des Unterteils (2) durch eine gewisse Anzahl von Schnappvorrichtungen (42) aufgehängt ist, welche am inneren Teil des oberen Randbereiches des Unterteils angebracht sind.

11. Käfig zur Aufnahme von Versuchstieren nach Anspruch 1, **dadurch gekennzeichnet, dass** er außerdem in einer Einsenkung (6) des Oberteils eine Öffnung (51) zum Einführen einer Flasche (9) umfasst, welche eine Klappvorrichtung (52) öffnet, die so ausgelegt ist, dass sie die Öffnung (51) abdichtet, wenn die Flasche entfernt ist, sowie um die Flasche herum eine O-Ring-Dichtung (53) umfasst, welche die Öffnung (51) abdichtet, wenn sich die Flasche darin befindet.

12. Käfig zur Aufnahme von Versuchstieren nach Anspruch 1, **dadurch gekennzeichnet, dass** das Unterteil (2) des Käfigs weiterhin zwei seitliche Führungen (8) umfasst, welche dergestalt ausgelegt sind, dass der Käfig auf horizontalen Gleitschienen (61) auf einem Gestell im hängenden Zustand gehalten wird, wobei die genannten seitlichen Führungen (8) an ihren Enden Arretierungslippen (62) aufweisen, welche das Verbleiben derselben in den jeweiligen Schienenrillen (63) der genannten Gleitschienen (61) gewährleisten; ferner **dadurch gekennzeichnet, dass** die Lufteintritts- und Luftaustrittsventile (3, 4) mit dem Gestell durch elastische Faltenrohre (64) dergestalt verbunden sind, dass, wenn der Käfig in das Gestell eingeführt werden soll, die seitlichen Führungen (8) auf den Gleitschienen (61) den gesamten Weg nach unten gleiten, wobei die elastischen Faltenrohre (64) die Verbindung mit den Ventilen (3, 4) gewährleisten.

13. Käfig zur Aufnahme von Versuchstieren nach Anspruch 12, **dadurch gekennzeichnet, dass** eine Kopplungsanzeigevorrichtung (82) unterhalb einer horizontalen oberen Seite (85) der genannten Gleitschiene (61) und hinter dem vorderen Ende (81) der nach unten gebogenen Gleitschiene vorhanden ist, wobei die genannte Kopplungsanzeigevorrichtung (82) in Form eines Hebels vorliegt, welcher sich um einen Drehpunkt (83) auf der genannten Gleitschiene dergestalt dreht, dass, wenn der genannte Käfig nicht vorhanden ist oder über den Gleitschienen (61) des Gestells ausgeklinkt ist und keinen festen Sitz hat, die genannte Kopplungsanzeigevorrichtung (82) unterhalb des genannten vorderen Endes (61) der nach unten gebogenen Gleitschiene sichtbar ist, und wenn der genannte Käfig im Gestell festen Sitz hat, die genannte Kopplungsanzeigevorrichtung (82) hinter dem genannten vorderen Ende (81) der nach unten gebogenen Gleitschiene verschwindet.

14. Käfig zur Aufnahme von Versuchstieren nach Anspruch 13, **dadurch gekennzeichnet, dass** ein innerer Arm der Kopplungsanzeigevorrichtung (82) einen Vorsprung (84) aufweist, welcher in eine Öffnung in der horizontalen oberen Seite (85) dergestalt eintritt, dass, wenn der Käfig nicht vorhanden oder über den Gleitschienen (61) des Gestells ausgeklinkt ist und keinen festen Sitz hat, sich der Vorsprung (84) nach oben bewegt und die Öffnung in der oberen Seite (85) verlässt und ein Ende (86) des gegenüber liegenden Arms der Kopplungsanzeigevorrichtung (82) sich nach unten bis unter das vordere Ende (81) der Gleitschiene bewegt und vom vorderen Teil des Gestells aus sichtbar wird, während andererseits, wenn der Käfig festen Sitz auf den Gleitschienen hat, der Vorsprung (84) durch die seitliche Führung (8) nach unten geschoben wird und das Ende (86) des gegenüber liegenden Arms der Kopplungsanzeigevorrichtung (82) sich nach oben bewegt und hinter dem vorderen Ende 81 verschwindet.

15. Käfig zur Aufnahme von Versuchstieren nach Anspruch 12, **dadurch gekennzeichnet, dass** die genannte Gleitschiene (61) eine horizontale Seite (85) und eine vertikale Seite (87) aufweist, wobei auf der genannten vertikalen Seite (87) in Richtung des Gestells ein oder mehrere vorstehende Haken (88) und ein oder mehrere vorstehende knopfförmige Teile (89) vorhanden sind, wobei die Letzteren in die entsprechenden Öffnungen in den Wänden (90) des Gestells eintreten und jede Seitenschiene, wenn sie an der Wand (90) des Gestells befestigt ist, zur gegenüberliegenden Seitenschiene, welche im Gestell den nächsten Käfig trägt, dergestalt gerichtet ist, dass zwei gegenüber liegende Seitenschienen eine spiegelbildliche Gestalt aufweisen, wobei die vorstehenden knopfförmigen Teile (89) sich in die Öffnungen in den Wänden (90) bewegen und die vorstehenden Haken (88) in die jeweiligen Öffnungen (91) in der zugewandten Seitenschiene einrasten, wodurch die spiegelbildlichen Gleitschienen an den Wänden (90) des Gestells befestigt werden.

16. Käfig zur Aufnahme von Versuchstieren nach Anspruch 1, **dadurch gekennzeichnet, dass** dieser Käfig außerdem eine Kunststofftrennwand (34) zwischen den genannten Lufteintritts- und Luftaustrittsventilen (3, 4) im inneren Teil des Oberteils umfasst, damit die Luft zur Vorderseite des Käfigs geleitet wird, um auf diese Weise die Wirksamkeit der Belüftung zu verbessern und jeglichen Kurzschluss der Luftströmung zwischen den zwei Ventilen zu vermeiden.

## Revendications

1. Cage destinée à contenir des animaux de laboratoire, ladite cage comportant une partie supérieure (1) et une base (2), un système de fermeture à la limite entre la partie supérieure et la base, des clapets d'entrée et de sortie d'air (3, 4), un dispositif de retenue de filtre (5) dans la partie supérieure, **caractérisée en ce que** le système de fermeture comporte :
au niveau d'un bord (21, 21') situé d'un premier côté de la limite, une rainure ayant une forme analogue à un U dirigé vers l'extérieur du bord,
un premier joint (22, 22') reçu dans ladite rainure en forme de U sur ledit bord (21, 21'), ledit premier joint ayant une lèvre (23, 23') faisant saillie vers l'extérieur du bord, et s'incurvant au contact avec un bord latéral (24, 24') situé de l'autre côté de la limite, ledit bord latéral recouvrant ledit bord (21, 21') pour définir la limite.

2. Cage destinée à contenir des animaux de laboratoire selon la revendication 1, **caractérisée en que** ladite rainure ayant une forme en U est dans ladite base (2) et ledit rebord latéral (24) est dans ladite partie supérieure (1).

3. Cage destinée à contenir des animaux de laboratoire selon la revendication 1, **caractérisée en ce que** ladite rainure ayant une forme en U est dans ladite partie supérieure (1) et ledit rebord latéral (24') est dans ladite base (2).

4. Cage destinée à contenir des animaux de laboratoire selon la revendication 1, **caractérisée en ce que** ledit premier joint (22, 22') recouvre radialement la totalité de la circonférence dudit bord supérieur (21, 21'), et est constitué de silicone.

5. Cage destinée à contenir des animaux de laboratoire selon la revendication 1, **caractérisée en ce qu'**elle comporte en outre au moins deux verrous (7), reliés d'un premier côté (7') à la base (2), et ayant une ligne d'incurvation (7") ayant une épaisseur plus petite, et un crochet en saillie (7"') au niveau du côté opposé, destiné à être retenu dans une fente (11) de la partie supérieure (1), de telle sorte qu'en fonctionnement le verrou s'incurve dans la ligne d'incurvation (7") et le crochet en saillie (7"') peut être mis en prise avec la fente (11) ou libéré de celle-ci.

6. Cage destinée à contenir des animaux de laboratoire selon la revendication 1, **caractérisée en ce qu'**elle comporte en outre un dispositif de retenue de filtre (5) destiné à des feuilles de filtre dans la partie supérieure (1), rendu étanche sur la partie supérieure par un second joint (25).

7. Cage destinée à contenir des animaux de laboratoire selon la revendication 6, **caractérisée en ce que** ledit dispositif de retenue de filtre (5) est maintenu dans un évidement de la partie supérieure, et rendu étanche sur l'évidement par ledit second joint (25) autour du périmètre du dispositif de retenue de filtre (5), ledit second joint ayant des lèvres (27) faisant saillie à l'extérieur du bord de dispositif de retenue et s'incurvant en contact avec un bord latéral (28) de l'évidement.

8. Cage destinée à contenir des animaux de laboratoire selon la revendication 6 ou 7, **caractérisée en ce que** ledit dispositif de retenue de filtre (5) a une saillie périmétrique (26), ledit second joint (25) étant reçu en forme de U par ladite saillie périmétrique (26).

9. Cage destinée à contenir des animaux de laboratoire selon la revendication 6 ou 7, **caractérisée en ce que** ledit dispositif de retenue de filtre (5) est fixé sur la partie supérieure (1) sur un premier côté par l'intermédiaire d'une attache (30) ayant une fente (31) retenant dans celle-ci un crochet (32) de la partie supérieure, et sur le côté opposé par l'intermédiaire de pattes (33) retenant des fentes du bord latéral de l'évidement.

10. Cage destinée à contenir des animaux de laboratoire selon la revendication 1, **caractérisée en ce qu'**elle comporte en outre un couvercle (41) à l'intérieur de la cage, ayant la forme d'une grille, recouvrant une partie seulement de la cage, approximativement la moitié, ledit couvercle (41) étant suspendu dans une partie supérieure de la base (2) par plusieurs volets (42) reliés à une partie interne du bord supérieur de la base.

11. Cage destinée à contenir des animaux de laboratoire selon la revendication 1, **caractérisée en ce qu'**elle comporte en outre un trou (51) dans un creux (6) de la partie supérieure, destiné à l'insertion d'une bouteille (9) ouvrant un volet (52) conçu pour assurer l'étanchéité du trou (51) lorsque la bouteille est enlevée, et un joint torique (53) situé autour de la bouteille assurant l'étanchéité du trou (51) lorsque la bouteille est en place.

12. Cage destinée à contenir des animaux de laboratoire selon la revendication 1, **caractérisée en ce que** la base (2) de la cage comporte en outre deux longerons latéraux (8) conçus pour maintenir la cage suspendue sur des rails de coulissement horizontaux (61) d'un râtelier, lesdits longerons latéraux (8) ayant aux extrémités des lèvres de blocage (62) se fixant dans des gorges de rail correspondantes (63) desdits rails de coulissement (61), et **en ce que** lesdits clapets d'entrée et de sortie (3, 4) sont reliés au râtelier par des soufflets élastiques (64), de sorte que pour insérer la cage dans le râtelier, les longerons latéraux (8) coulissent sur les rails de coulissement (61), jusqu'au bout, où les soufflets élastiques (64) assurent la fixation des clapets (3, 4).

13. Cage destinée à contenir des animaux de laboratoire selon la revendication 12, **caractérisée en ce qu'**un indicateur d'amarrage (82) est présent en dessous d'un côté supérieur horizontal (85) dudit rail de coulissement (61), et derrière l'extrémité avant (81) du rail de coulissement pliée vers le bas, ledit indicateur d'amarrage (82) ayant la forme d'un levier pivotant autour d'un point de pivotement (83) situé sur ledit rail de coulissement, de telle sorte que, quand ladite cage n'est pas présente ou est libérée au-dessus des rails de coulissement (61) du râtelier et n'est pas fermement fixée, ledit indicateur d'amarrage (82) est visible en dessous de ladite extrémité avant (81) du rail de coulissement pliée vers le bas, et lorsque ladite cage est fermement fixée sur le râtelier, ledit indicateur d'amarrage (82) disparaît derrière ladite extrémité avant (81) du rail de coulissement pliée vers le bas.

14. Cage destinée à contenir des animaux de laboratoire selon la revendication 13, **caractérisée en ce qu'**un bras interne de l'indicateur d'amarrage (82) a une saillie (84) entrant dans un trou situé dans le côté supérieur horizontal (85), de telle sorte que, quand la cage n'est pas présente ou est libérée au-dessus des rails de coulissement (61) du râtelier et n'est pas fermement fixée, la saillie (84) se lève et sort à l'extérieur du trou du côté supérieur (85), et une extrémité (86) du bras opposé de l'indicateur d'amarrage (82) descend en dessous de l'extrémité avant (81) du rail de coulissement et devient visible à partir de la partie avant du râtelier, tandis que, quand la cage est fermement fixée sur les rails de coulissement, la saillie (84) est poussée vers le bas par le longeron latéral (8), et l'extrémité (86) du bras opposé de l'indicateur d'amarrage (82) remonte et disparaît derrière l'extrémité avant (81).

15. Cage destinée à contenir des animaux de laboratoire selon la revendication 12, **caractérisée en ce que** ledit rail de coulissement (61) a un côté horizontal (85) et un côté vertical (87), dans ledit côté vertical (87) dirigé vers le râtelier, il y a un ou plusieurs crochets en saillie (88) et un ou plusieurs boutons en saillie (89), ces derniers pénétrant dans des trous correspondants dans les parois (90) du râtelier, chaque rail de coulissement, lorsqu'il est fixé sur une paroi (90) du râtelier, étant dirigé vers un rail de coulissement opposé supportant la cage suivante dans le râtelier, de sorte que deux rails de coulissement opposés ont une forme spéculaire, lesdits boutons en saillie (89) pénétrant dans les trous des parois (90) et les crochets en saillie (88) venant en prise avec des trous correspondants (91) situés dans le rail de coulissement se trouvant en vis-à-vis, en fixant fermement lesdits rails de coulissement spéculaires sur les parois (90) du râtelier.

16. Cage destinée à contenir des animaux de laboratoire selon la revendication 1, **caractérisée en ce que** la cage comporte en outre une cloison de séparation en matière plastique (34) entre lesdits clapets d'entrée et de sortie d'air (3, 4), dans la partie interne de la partie supérieure, pour canaliser l'air vers l'avant de la cage, pour améliorer ainsi l'efficacité de la ventilation, et éviter tout raccourci d'air entre les deux clapets.
